# EUROPÄISCHE PATENTSCHRIFT

(11) **EP 0 846 908 B1**
(45) Veröffentlichungstag und Bekanntmachung des Hinweises auf die Patenterteilung: **24.10.2001**
(21) Anmeldenummer: 97118786.9
(22) Anmeldetag: 08.01.1998
(51) Int. Cl.: F16L 37/092

(54) **Verbindung zwischen einem Rohr und einem Formteil**
Connection between pipe and component.
Connection entre tube et composant.

(43) Veröffentlichungstag der Anmeldung: 10.06.1998
(73) Patentinhaber: Georg Fischer Rohrleitungssysteme AG, 8201 Schaffhausen (CH)
(72) Erfinder: Porfido, Erasmo, 8200 Schaffhausen (DE); Kling, Bernd, 78244 Gottmadingen (DE); Bamberger, Michael, 78262 Gailingen (DE)
(74) Vertreter: Weiss, Wolfgang, Dr.

(56) Entgegenhaltungen:
- EP-A- 0 447 723
- DE-A- 3 525 502
- US-A- 2 848 256

## Beschreibung

Die vorliegende Erfindung betrifft eine Verbindung zwischen einem Rohr und einem Formteil mit Hilfe eines das Rohr umfassenden Klemmringes, welcher in einem das Rohr umgebenden, an einem Ende sich konisch verjüngenden Gehäuse angeordnet ist und mit einer Feder zusammenwirkt, welche in ihrer Wirkstellung den Klemmring zwischen dem konischen Teil des Gehäuses und dem Rohr verspannt.

Eine solche Verbindung ist aus der Veröffentlichung DE 35 25 502 bekannt geworden und als dichtende Rohrsteckverbindung gestaltet.

Der Nachteil solcher bekannten Klemmverbindungen besteht einerseits darin, dass die eingesetzte Klemmkraft nicht oder nur schwer kontrollierbar ist, was bei zu grosser Kraftanwendung zur Beschädigung oder sogar zur Zerstörung der Verbindung und bei zu kleiner Kraftanwendung zu Undichtigkeiten führen kann.

Ferner ist die Lösung einer solchen Verbindung kompliziert und oft nur durch den Einsatz von Spezialwerkzeugen möglich.

Der Erfindung liegt daher die Aufgabe zugrunde eine Verbindung der eingangs erwähnten Art zu schaffen, bei der die angewendete Klemmkraft definiert einstellbar ist. Darüber hinaus soll die Verbindung einfach und schnell trennbar sein.

Zur Lösung der gestellten Aufgabe wird von einer Verbindung wie eingangs erwähnt ausgegangen, bei welcher erfindungsgemäss das Gehäuse ein zwischen zwei Stellungen bewegbares Arretierorgan trägt, welches in der Arretierstellung in den Federweg der als Druckfeder ausgebildeten Schraubenfeder ragend einen Anschlag für die zusammengepresste Druckfeder bildet und diese auf den Klemmring einzuwirken hindert, während das Arretierorgan in seiner zweiten Stellung die Druckfeder entlastet und zum schlagartigen Entspannen freigibt.

Durch die Verwendung einer vorgespannten Druckfeder, welche zur Arretierung des Klemmringes plötzlich und schlagartig entspannt wird, kann eine vorgegebene Kraft gezielt eingesetzt werden. Die Auslösung der Druckfeder erfolgt sehr einfach durch die Betätigung eines Arretier organs, das als Arretiergebüget ausgebildet werden kann, wodurch die ausgelöste vorbestimmte Federkraft in keiner Weise Beeinflusst wird.

Mit der Auswahl der geeigneten Druckfeder, kann die eingesetzte Kraft genau bestimmt und er zu verbindenden Teilen angepasst werden.

Da die tatsächliche Verbindung mit Hilfe des Klemmringes zwischen dem Rohr und einem Gehäuse stattfindet, welches seinerseits vom Formteil in einfacher Weise getrennt werden kann, bildet eine allfällige Lösung der Klemmverbindung kein Problem, da gemäss einer Bevorzugten Ausführung der Verbindung das Gehäuse, welches das Rohr, den Klemmring und das Formteil umgibt, mit Hilfe eines Sicherungselementes drehbar und lösbar am Formteil befestigt wird. Dieses Sicherungselement kann mit einfachen Handgriffen gelöst werden, worauf das Formteil entfernt und der Klemmring freigelegt werden kann.

Weitere Merkmale der Erfindung ergeben sich aus der nachfolgenden Beschreibung eines bevorzugten Ausführungsbeispieles, das an Hand der Zeichnung anschliessend näher erläutert wird.

Auf der Zeichnung zeigen:
- Fig. 1: einen teilweisen Längsschnitt durch eine erfindungs gemässe Verbindung.
- Fig. 2: eine Stirnansicht der Verbindung von Fig. 1;
- Fig. 3: einen teilweisen Längsschnitt durch das Gehäuseteil der Verbindung von Fig. 1;
- Fig. 4: einen Schnitt durch ein Sicherungselement der Verbindung von Fig. 1 nach deren Linie A-A

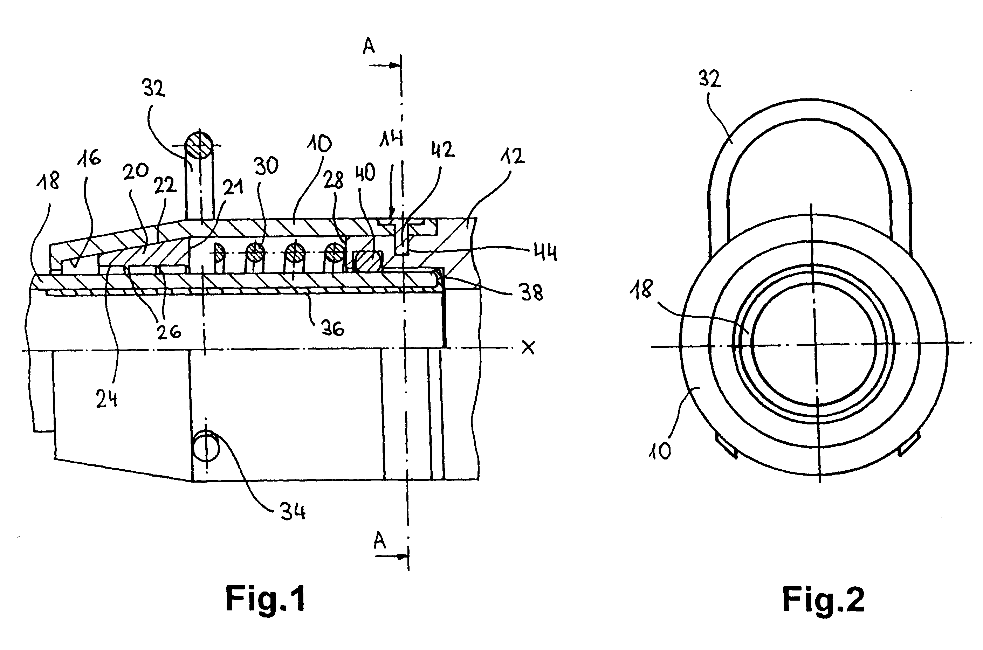

Ein rohrförmiges Gehäuse 10 übergreift gemäss Fig. 1 ein Formteil 12 stirnseitig und ist an diesem mit einem weiter unten näher beschriebenen Sicherungselement 14 festgelegt.

Das Gehäuse 10 weist an seinem dem Formteil 12 abgewandten Ende eine gegen das freie Ende des Gehäuses 10 konisch zulaufende Innenwand 16 auf. In diesem konisch zulaufenden Bereich des Gehäuses 10 ist ein Klemmring 20 mit einer der konischen Innenwand 16 entsprechenden konischen Umfangfläche 22 eingelegt. Die Innenfläche 24 des Klemmrings 20 ist mit radial umlaufenden Profilvorsprüngen 26 versehen. Am Klemmring 20 sind zusätzlich über seinen Umfang verteilte, axial verlaufende Schlitze angeordnet. Diese in der Zeichnung nicht dargestellten Schlitze unterstützen die radiale Kompressibilität des Klemmrings 20.

In dem an das Formteil 12 angrenzenden Teil des Gehäuses 10 ist eine spiralförmige Druckfeder 30 in axialer Richtung x angeordnet. Das eine Ende der Druckfeder 30 steht in Anschlag mit einer Stirnseite 28 des Formteils 12 und liegt mit dem anderen Ende einem Bohrungen 34 im Gehäuse 10 durchsetzenden Arretierbügel 32 unter Vorspannung an.

Ein Rohr 18 ist in das Gehäuse 10 bis zu einem Anschlag mit dem Formteil 12 so eingesetzt, dass der Klemmring 20 und die Druckfeder 30 das Rohr 18 umschliessen.

An der Innenwand des Rohres 18 ist eine Stützhülse 36 angeordnet. Eine das stirnseitige Ende des Rohres 18 übergreifende Umbördelung 38 der Stützhülse 36 schützt einen in das Formteil 12 eingelegten Dichtungsring 40 vor einer Verletzung durch scharfe Kanten beim Einschieben des Rohres 18 in das Gehäuse 10.

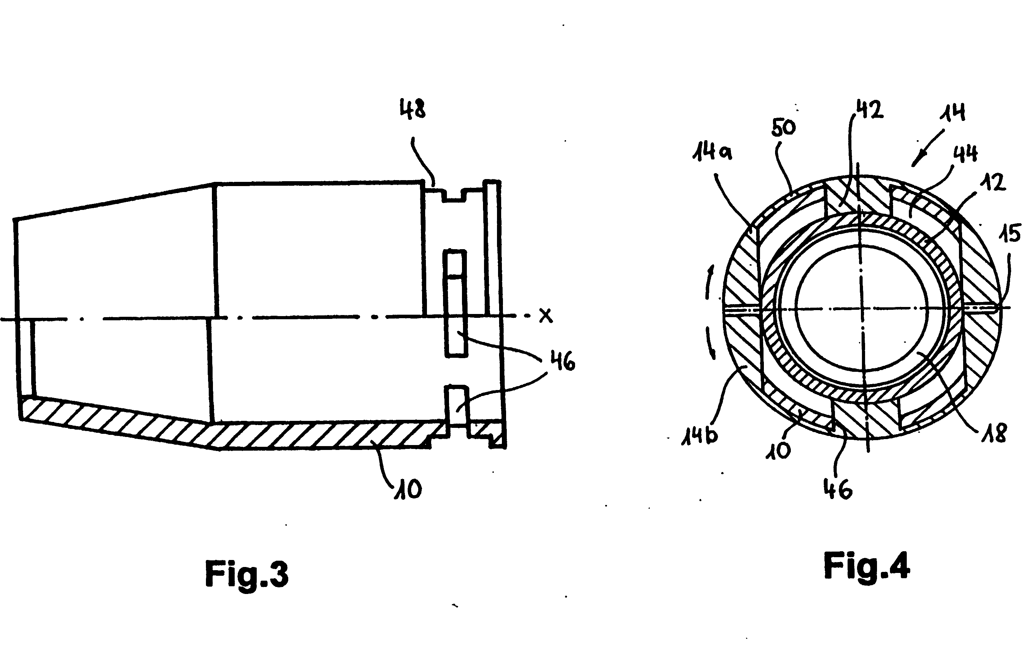

Aus Fig. 3 und 4 ist die Ausgestaltung des Sicherungselementes 14 sowie dessen Positionierung im Gehäuse 10 ersichtlich.

Das Sicherungselement 14 ist ringförmig aus zwei bis auf eine gemeinsame Verbindungsstelle 15 geringer Materialstärke aus zwei identischen Teilen 14a, 14b aufgebaut, die sich bis zu einem gewissen Grad aufspannen lassen. Von einem Umfangteil 50 radial nach innen abragende Rastorgane 42 durchdringen beim Einsetzen des Sicherungselementes 14 schlitzartige Oeffnungen 46 im Gehäuse 10. In Einbaulage ist das Sicherungselement 14 in eine am Gehäuse 10 radial umlaufende Nut 48 eingelegt und die Rastorgane 42 stehen mit einer im Formteil 12 angeordneten, radial umlaufenden Nut 44 in Eingriff. Mit der gewählten Anordnung ist das Gehäuse 10 am Formteil 12 drehbar festgelegt, so dass vor dem Anschluss des Rohres 18 an das Formteil 12 der Arretierbügel 32 in eine zur Bedienung günstige Position gedreht werden kann.

Der Zusammenbau sowie die Funktionsweise der Verbindung wird nachstehend anhand der Fig. 1 näher erläutert.

Zunächst wird der Klemmring 20 in das Gehäuse 10 eingeführt und der Arretierbügel 32 in die Bohrungen 34 im Gehäuse 10 eingesteckt. Nach dem Einsetzen der Druckfeder 30 wird diese durch das Aufschieben des Gehäuses 10 auf das Formteil 12 gespannt. Durch Einsetzen des Sicherungselementes 14 wird das Gehäuse 10 am Formteil 12 fixiert, so dass die Druckfeder 30 in ihrer vorgespannten Lage zwischen der Stirnseite 28 des Formteils 12 und dem Arretierbügel 32 gehalten ist.
Nach dem Einschieben des Rohres 18 in das Gehäuse 10 wird der Arretierbügel 32 aus dem Gehäuse 10 herausgezogen. Hierbei entspannt sich die Druckfeder 30 bis zum direkten Anschlag mit dem benachbarten stirnseitigen Ringrand 21 des Klemmrings 20 und drückt diesen gegen die konisch zulaufende Innenwand 16 des Gehäuses 10. Gleichzeitig wird der Klemmring 20 -- unterstützt durch die axial angeordneten Schlitze -- radial komprimiert, d.h. sein Durchmesser verkleinert sich, so dass die von der Innenfläche 24 des Klemmrings 20 abragenden Profilvorsprünge 26 als Verzahnungselemente in die Oberfläche des Rohres 18 eingedrückt werden. Durch die radiale Kompressibilität des Klemmrings 20 werden Toleranzunterschiede im Rohraussendurchmesser problemlos ausgeglichen.

Mit der definierten Vorspannung der Druckfeder 30 ist auch die auf den Klemmring 20 in seiner verkeilenden Funktionsstellung wirkende Federkraft vorgegeben und kann entsprechend den an eine Verbindung gestellten Anforderungen eingestellt werden.

Die Klemmkraft des Klemmringes 20 bleibt durch die Restspannung der Druckfeder 30 erhalten. Bei einer Zugbelastung auf die Verbindung wird der Klemmring 20 zusätzlich gegen die konische Innenwand 16 des Gehäuses 10 gedrückt, wodurch der Klemmring 20 zusätzlich radial komprimiert und dadurch noch stärker gegen das Rohr 18 gepresst wird.

## Patentansprüche

1. Verbindung zwischen einem Rohr (18) und einem Formteil (12) mit Hilfe eines das Rohr (18) umfassenden Klemmringes (20), welcher in einem das Rohr (18) umgebenden, an einem Ende sich konisch verjüngenden Gehäuse (10) angeordnet ist und mit einer Schraubenfeder zusammenwirkt, welche in ihrer Wirkstellung den Klemmring (2) zwischen dem konischen Teil des Gehäuses (10) und dem Rohr (18) verspannt, **dadurch gekennzeichnet, dass** das Gehäuse (10) ein zwischen zwei Stellungen bewegbares Arretierorgan (32) trägt, welches in der Arretierstellung in den Federweg der als Druckfeder (30) ausgebildeten Schraubenfeder ragend einen Anschlag für die zusammengepresste Druckfeder (30) bildet und diese auf den Klemmring (20) einzuwirken hindert, während das Arretierorgan (32) in seiner zweiten Stellung die Druckfeder (30) entlastet und zum schlagartigen Entspannen freigibt.

2. Verbindung nach Anspruch 1, **dadurch gekennzeichnet,dass** die Druckfeder (30) an ihrem dem Klemmring (20) abgekehrten Ende sich gegen einen am Formteil (12) angeordneten Anschlag (28) abstützt.

3. Verbindung nach Anspruch 1 und 2, **dadurch gekennzeichnet, dass** das Arretierorgan als Arretierbügel (32) ausgebildet und in Bohrungen (34) senkrecht zur Achse der Druckfeder (30) hin- und herbewegbar geführt ist.

4. Verbindung nach Anspruch 1, **dadurch gekennzeichnet,dass** das Gehäuse (10), welches das Rohr (18) und den Klemmring (20) sowie das Formteil (12) umgibt, an seinem dem konisch verjüngten Teil abgekehrten Ende mit Hilfe eines Sicherungselementes (14) drehbar und lösbar am Formteil (12) befestigt ist.

5. Verbindung nach Anspruch 4, **dadurch gekennzeichnet, dass** das Sicherungselement (14) zwei identische, aufspannbare Teile (14a. 14b) und ein Umfangsteil (50) aufweist, welches nach innen ragende Rastorgane (42) trägt, die durch schlitzartige Öffnungen (46) des Gehäuses (10) geführt sind und in eine am Gehäuse (10) radial umlaufenden Nut (44) eingreifen.

6. Verbindung nach Anspruch 1 - 5, **dadurch gekennzeichnet, dass** der Klemmring (20) an seiner dem Rohr (18) zugewandten Innenfläche (24) Verzahnungselemente (26) bildende Vorsprünge besitzt.

7. Verbindung nach Anspruch 1 - 6, **dadurch gekennzeichnet, dass** der radial zusammenpressbar ausgebildete Klemmring (20) am Umfang verteilte achsiale Schlitze aufweist.

## Claims

1. Connection between a pipe (18) and a moulding (12) with the aid of a clamping ring (20) which encloses the pipe (18), is arranged in a housing (10) surrounding the pipe (18) and tapering conically at one end and interacts with a helical spring which, in its operating position, braces the clamping ring (2) between the conical part of the housing (10) and the pipe (18), **characterized in that** the housing (10) has a locking member (32) which can be moved between two positions and, in the arresting position, protruding into the spring path of the helical spring designed as a compression spring (30), forms a stop for the compressed compression spring (30) and prevents the latter from acting on the clamping ring (20), whereas, in its second position, the arresting member (32) relieves the compression spring (30) and allows it to relax abruptly.

2. Connection according to Claim 1, **characterized in that** the compression spring (30) is supported at its end remote from the clamping ring (20) against a stop (28) arranged on the moulding (12).

3. Connection according to Claims 1 and 2,
**characterized in that** the arresting member is designed as a locking clip (32) and is guided in bores (34) such that it can be moved back and forth at right angles to the axis of the compression spring (30).

4. Connection according to Claim 1, **characterized in that** the housing (10) surrounding the pipe (18) and the clamping ring (20) as well as the moulding (12), is rotatably and detachably fixed, at its end remote from the part tapering conically, to the moulding (12) by means of a locking element (14).

5. Connection according to Claim 4, **characterized in that** the locking element (14) shows two identical, clampable parts (14a, 14b) and a circumferential part (50) bearing inward projecting locking members (42) which are led through slot-type openings (46) of the housing (10) and lock in a circumferential groove (44) arranged in radial direction at the housing (10).

6. Connection according to Claims 1 to 5, **characterized in that** the clamping ring (20), at its inner surface (24) facing the pipe (18), is provided with projections forming toothed elements (26).

7. Connection according to Claims 1 to 6, **characterized in that** the clamping ring (20) which is designed such that it can be compressed radially, shows axial slots distributed on its circumference.

## Revendications

1. Connexion entre un tube (18) et une pièce façonnée (12) au moyen d'une bague de serrage (20) entourant le tube (18), qui est disposée dans un boîtier (10) entourant le tube (18), se rétrécissant en cône à une extrémité, et qui coopère avec un ressort à boudin, lequel, dans sa position active, serre la bague de serrage (20) entre la partie conique du boîtier (10) et le tube (18), **caractérisée en ce que** le boîtier (10) porte un organe de blocage (32) mobile entre deux positions, lequel forme, dans la position de blocage en saillie dans la course du ressort à boudin conçu en tant que ressort de compression (30), une butée pour le ressort de compression (30) comprimé, et empêche celui-ci d'agir sur la bague de serrage (20), tandis que l'organe de blocage (32), dans sa deuxième position, décharge le ressort de compression (30) et le libère pour permettre sa détente brusque.

2. Connexion selon la revendication 1, **caractérisée en ce que** le ressort de compression (30), à son extrémité opposée à la bague de serrage (20), s'appuie contre une butée (28) disposée sur la pièce façonnée (12).

3. Connexion selon la revendication 1 et 2,
**caractérisée en ce que** l'organe de blocage est conçu en tant qu'arceau de blocage (32) et est guidé dans des alésages (34) perpendiculairement à 5 l'axe du ressort de compression (30) de manière déplaçable d'avant en arrière.

4. Connexion selon la revendication 1, **caractérisée en ce que** le boîtier (10), qui ceint le tube (18) et la bague de serrage (20) ainsi que la pièce façonnée (12), est fixé de manière pivotante et amovible sur ladite pièce façonnée (12) par son extrémité détournée de la pièce en cône au moyen d'un élément de fixation (14).

5. Connexion selon la revendication 4, **caractérisée en ce que** l'élément de fixation (14) présente deux pièces identiques pouvant être serrées (14a, 14b) et une pièce périphérique (50) qui supporte des organes à encliqueter (42) dépassant vers l'intérieur et qui sont guidés par des orifices (46) en forme d'encoche sur le boîtier (10) et qui viennent s'engrener dans une rainure (44) péripherique dans l'axe radial sur le boîtier (10).

6. Connexion selon les revendications 1 à 5, **caractérisée en ce que** la bague de serrage (20) possède au niveau de sa surface intérieure (24) orientée vers le tube (18) des saillies formant des éléments dentés (26).

7. Connexion selon les revendications 1 à 6, **caractérisée en ce que** la bague de serrage (20) conçue de manière à pouvoir être resserrée sur son axe radial présente des fentes axiales réparties sur la circonférence.
